# EUROPÄISCHE PATENTSCHRIFT

(11) **EP 3 896 011 B1**
(45) Veröffentlichungstag und Bekanntmachung des Hinweises auf die Patenterteilung: **31.01.2024**
(21) Anmeldenummer: 21162482.0
(22) Anmeldetag: 15.03.2021
(51) Int. Cl.: B65G 21/22

(54) **FÜHRUNGSPROFIL UND FÖRDERSYSTEM**
GUIDE PROFILE AND CONVEYOR SYSTEM
PROFIL DE GUIDAGE ET SYSTÈME DE TRANSPORT

(30) Priorität: 15.04.2020 DE 102020204720
(43) Veröffentlichungstag der Anmeldung: 20.10.2021
(73) Patentinhaber: Robert Bosch GmbH, 70442 Stuttgart (DE)
(72) Erfinder: Buttau, Hans-Peter, 74348 Lauffen (DE); Kiebel, Markus, 70499 Stuttgart (DE)

(56) Entgegenhaltungen:
- EP-B1- 1 273 536
- DE-U1- 20 306 613
- US-A- 3 265 192
- US-A- 3 491 873
- US-A- 4 961 492
- US-A1- 2010 282 576

## Beschreibung

Die Erfindung betrifft ein Führungsprofil für ein Fördersystem gemäß Patentanspruch 1, sowie ein Fördersystem mit einem derartigen Führungsprofil nach Patentanspruch 9.

Aus dem Stand der Technik, beispielsweise aus der DE 10 2005 046 302 A2 sind Fördersysteme, auch Transfersysteme genannt, bekannt, deren grundsätzlicher Aufbau aus einem Profilkörper besteht, in oder an dem eine Kette geführt wird. Bei den Ketten kann es sich um bekannte Flachplattenketten oder Staurollenketten handeln. Zur verbesserten Führung der Ketten entlang des Profilkörpers sind Gleitleisten vorgesehen, die beispielsweise in Ausnehmungen des Profilkörpers eingesetzt sind und an oder auf denen die Ketten geführt sind. Dabei sind die Ketten durch die Gleitleisten von dem Profilkörper beabstandet, so dass kein direkter Kontakt zwischen Kette und Profilkörper vorliegt. Die Gleitleisten sind dabei mittels Klipsen in einer Ausnehmung des Profilkörpers gehalten.

Aus der DE 203 06 613 U1 ist ein Führungsprofil für ein Fördersystem mit einem Profilkörper, in den mehrere Gleitleisten eingesetzt sind, bekannt. Mittels der Gleitleisten ist eine Kette des Fördersystems an dem Profilkörper abstützbar. Die Gleitleisten sind im Querschnitt betrachtet C-förmig ausgeführt und weisen jeweils zwei Schenkelenden und einen diese Schenkelenden verbindenden Verbindungsbereich auf. Die Gleitleisten sind jeweils unter Umfassung eines freien Endes eines Steges des Tragprofiles auf diesen Steg aufsteckbar. Die Gleitleisten weisen jeweils ein Rastmittel zum verrastenden Aufstecken der Gleitleisten auf die Stege des Tragprofiles auf, und werden somit an dem Steg festgeklipst.

Die US 4 961 492 A offenbart ein Führungsprofil für ein Fördersystem nach dem Oberbegriff des Anspruchs 1.

Nachteilig an der aus dem Stand der Technik bekannten Lösung ist, dass die Gleitleisten nur stirnseitig in den Profilkörper eingeschoben werden können. Das heißt, dass ein Wechsel der Gleitleisten an einem bereits fertig hergestellten, montierten und sich im Betrieb befindlichen Fördersystems sehr aufwändig ist, da sie auszutauschenden Gleitleisten ebenfalls stirnseitig aus den Profilkörpern herausgezogen werden müssen. Darüber hinaus sind zusätzliche Haltemittel notwendig um die Gleitleisten in ihrer Endlage zu halten.

Die Aufgabe der Erfindung liegt nunmehr darin, Führungsprofile für ein Fördersystem bereitzustellen, die bei zumindest gleichwertigen Funktionseigenschaften wesentlich leichter montiert sowie demontiert werden können. Weiterhin besteht die Aufgabe der Erfindung darin ein Fördersystem mit, oder zur Aufnahme von, derartigen Gleitleisten bereitzustellen.

Diese Aufgaben werden durch ein Führungsprofil mit den Merkmalen des Patentanspruchs 1, bzw. ein Fördersystem mit den Merkmalen des Patentanspruchs 9 gelöst.

Vorteilhafte Weiterbildungen der Erfindungen sind Gegenstand der Unteransprüche.

Ein erfindungsgemäßes Führungsprofil für ein Fördersystem weist einen Profilkörper auf, in den eine Gleitleiste eingesetzt ist. Die Gleitleiste ist derart ausgebildet, dass sie das Gewicht einer Kette, die dem Fördersystem als Antrieb dient, tragen bzw. aufnehmen kann. Die Gleitleiste befindet sich dabei in Anlage mit einem Aluminiumprofil des Fördersystems. Das Gewicht der Kette wird über die Gleitleiste an einem Profilkörper eines Fördersystems abgestützt. Die Gleitleiste ist zumindest abschnittsweise mit dem Profilkörper in Anlage. Erfindungsgemäß weist die Gleitleiste einen Gelenkschenkel auf, der dazu ausgelegt ist, in eine Ausnehmung des Profilkörpers durch Einschwenken eingesetzt zu werden.

Der Gelenkschenkel ist als Schwenkschenkel ausgebildet, wobei ein bogenförmiger Abschnitt der Gleitleiste, in einer Schwenkbewegung in die entsprechend bogenförmig ausgebildete Ausnehmung des Profilkörpers eingeschwenkt wird, so dass der Gelenkschenkel in Förderrichtung formschlüssig in dieser aufgenommen ist.

Der Vorteil dieser Lösung gegenüber dem eingangs genannten Stand der Technik besteht darin, dass bei der erfindungsgemäßen Lösung die Montage, sowie die Demontage der Gleitleiste in dem Fördersystem, wesentlich vereinfacht ist.

Bei einer bevorzugten Lösung ist der Gelenkschenkel in einem Eckbereich der Gleitleiste ausgebildet. Vorteilhafterweise ist durch die Anordnung des Gelenkschenkels in einem Eckbereich eine hinreichend große Fläche zur Abstützung des Gewichts der Gleitleiste, sowie der Kette, an einer Unterseite der Gleitleiste gewährleistet. Die Flächenpressung ist dementsprechend gering.

Durch die erfindungsgemäße Anordnung des Gelenkschenkels an der Gleitleiste lässt sich diese von oben, das heißt etwa senkrecht zu der Förderrichtung in den Profilkörper einsetzen. Diese Art der Montage und Demontage ist besonders vorteilhaft, da im Gegensatz zu den aus dem Stand der Technik bekannten Lösungen die Gleitleiste ohne weiteres ausgetauscht werden kann. So ist beispielsweise keine Demontage von Abschlussleisten, Antrieben, Umlenkungen oder Ähnlichem mehr notwendig, um die Gleitleisten stirnseitig aus dem Profilkörper zu entnehmen. Vielmehr können die Gleitleisten, oder Abschnitte der Gleitleisten, aus ihrer Einbaulage nach oben entfernt werden. Umgekehrt lassen sie sich ebenso anwenderfreundlich wiedereinsetzen.

In einem bevorzugten Ausführungsbeispiel ist die Gleitleiste durch einen Hinterschnitt an dem Gelenkschenkel im Sinne einer Formschluss-Sicherung in der Endlage gehalten.

Es wird besonders bevorzugt, die Gleitleiste derart auszubilden, dass sie ohne Verrastung in ihrer Endlage gehalten ist. Demnach ist die Gleitleiste so ausgebildet, dass die Formgebung des Gelenkschenkels und der Ausnehmung, beispielsweise durch den Hinterschnitt, so gewählt sind, dass ein ungewolltes Herausrutschen der Gleitleiste aus dem Profilkörper verhindert ist. Die Einbaulage und das Gewicht der Kette sorgen auch im Betrieb des Fördersystems dafür, dass die Gleitleiste in ihrer Endlage gehalten ist.

Um bei einem Transport des Führungsprofils ein Herausrutschen oder Verkippen der Gleitleisten zu verhindern, ist es bevorzugt, wenn eine Transportsicherung vorgesehen ist. Diese Transportsicherung ist in einer besonders einfachen und bevorzugten Ausführungsform durch Klebeband ausgeführt, das an zwei sich gegenüberliegenden Stirnseiten des Profilkörpers derart angebracht ist, dass die Gleitleisten und der Profilkörper gemeinsam mit einer Klebefläche des Klebebands in Anlage sind, so dass die Gleitleisten verrutschsicher in ihrer Endlage gehalten sind.

Das erfindungsgemäße Fördersystem ist mit einer erfindungsgemäßen Gleitleiste ausgeführt. Erfindungsgemäß ist dabei die Kette über die Gleitleisten an dem Profilkörper abgestützt. Das Eigengewicht der Kette, sowie die Einbaulage der Gleitleiste, halten diese in einer Endlage. Eine Verrastung der Gleitleiste in einer Endlage ist nicht vorgesehen.

Bei einem bevorzugten Ausführungsbeispiel des erfindungsgemäßen Fördersystems ist die Kette als Staurollenkette oder als Flachplattenkette ausgeführt.

Bevorzugte Ausführungsbeispiele der Erfindung werden im Folgenden anhand schematischer Zeichnungen näher erläutert. Es zeigen:
Fig. 1 einen Ausschnitt eines Profilkörpers eines Fördersystems zur Anwendung mit Flachplattenketten in einer Schnittdarstellung;
Fig. 2 einen Teil eines Profilkörpers eines Fördersystems zur Verwendung mit Staurollenketten in einer Schnittdarstellung;
Fig. 3 eine Einzeldarstellung einer Gleitleiste;
Fig. 4 einen Profilkörper eines Fördersystems zur Verwendung mit Staurollenketten in einer Schnittdarstellung;
Fig. 5 eine Detaildarstellung gemäß Figur 4;
Fig. 6 einen Ausschnitt eines Profilkörpers eines Fördersystems zur Anwendung von Flachplattenketten in einer Schnittdarstellung;
Fig. 7 eine Detaildarstellung gemäß Figur 6 und
Fig. 8 eine stark vereinfachte dreidimensionale Ansicht eines Profilkörpers mit montierten Gleitleisten und einer Transportsicherung.

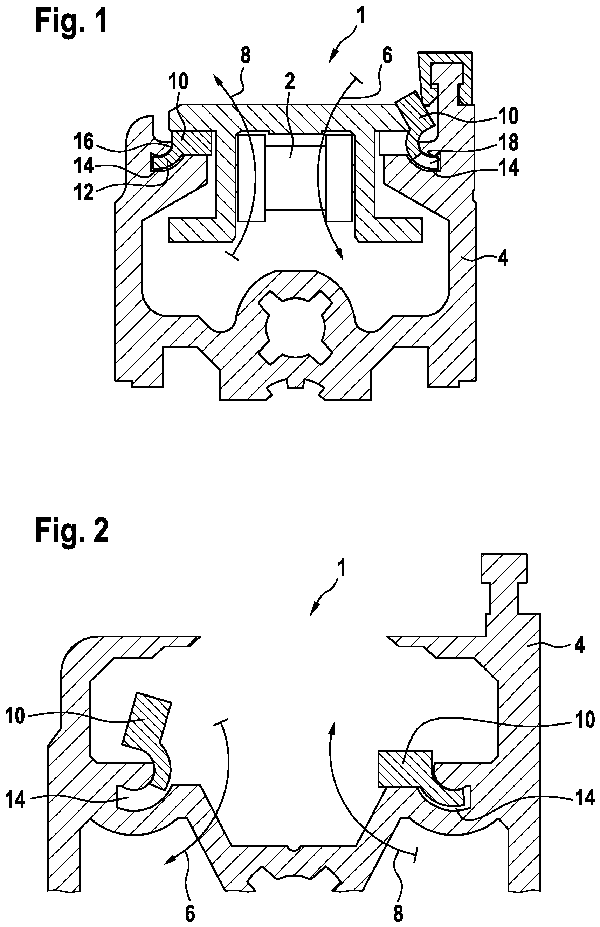

In Figur 1 ist ein Teil eines Fördersystem 1 mit einer Flachplattenkette 2 gezeigt, die mittels einem Profilkörper 4 geführt ist. Eine Förderrichtung des Fördersystems 1 verläuft in diesem Ausführungsbeispiel senkrecht zur Darstellungsebene. Die Flachplattenkette 2 ist in an sich bekannter Weise entlang von Gleitleisten 10 geführt, die auswechselbar am Profilkörper 4 gehalten sind. Zur Veranschaulichung einer Einbau- und Ausbaurichtung 6, 8 der Gleitleiste 10 ist in dieser Darstellung die rechte Gleitleiste 10 in einer Einbauposition gezeigt. Mit "Einbauposition" ist ein erster Montageschritt gemeint, in dem die Gleitleiste 10 mit einem Endabschnitt eines Gelenkschenkels 12 an eine Ausnehmung 14 angesetzt ist. Die Gleitleiste 10 in ihrer Endlage ist beidseitig dargestellt.

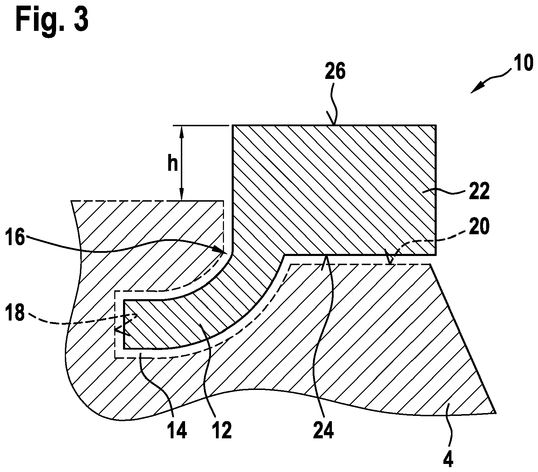

Die Gleitleisten 10 sind an einem Eckbereich 16 mit bogenförmigen Gelenkschenkeln 12 versehen, die in die Ausnehmungen 14 des Profilkörpers 4 eintauchen, bis ein Endabschnitt des Gelenkschenkels 12 an einer Anschlagfläche 18 der Ausnehmung 14 anliegt. In Figur 3 wird dies detaillierter gezeigt.

Der Gelenkschenkel 12 ist in einer Art Gleit-/Presspassung in die Ausnehmung 14 eingesetzt. So ist gewährleistet, dass die Gleitleisten 10 von oben, also senkrecht zur Förderrichtung, eingesetzt werden können. Durch das Eigengewicht der Flachplattenkette 2 werden die Gleitleisten 10 in ihrer Endlage gehalten. Die Flachplattenkette 2 wird demnach über die Gleitleisten 10 auf dem Profilkörper 4 abgestützt. Sofern ein Austausch der Gleitleisten 10 erforderlich wird, muss lediglich die Flachplattenkette 2 ein Stück weit von den entsprechenden Gleitleisten 10 beabstandet werden, so dass diese auf einfachste Art und Weise nach oben hin entnommen und gegen neue Gleitleisten 10 ausgetauscht werden können.

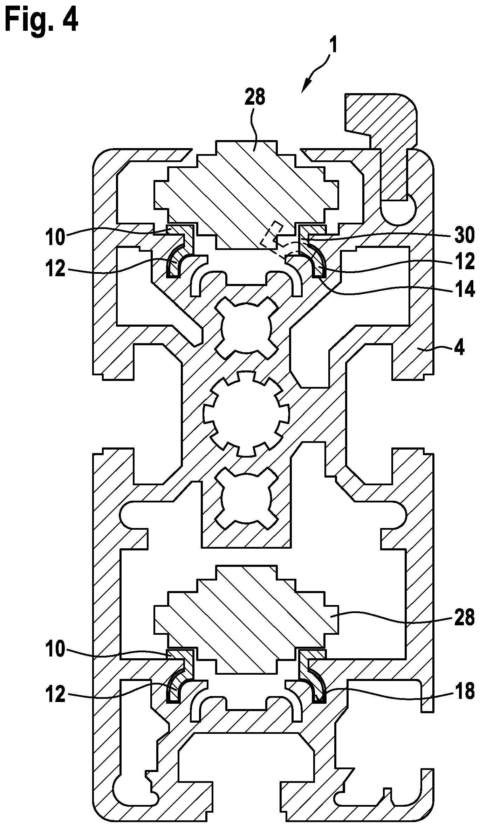

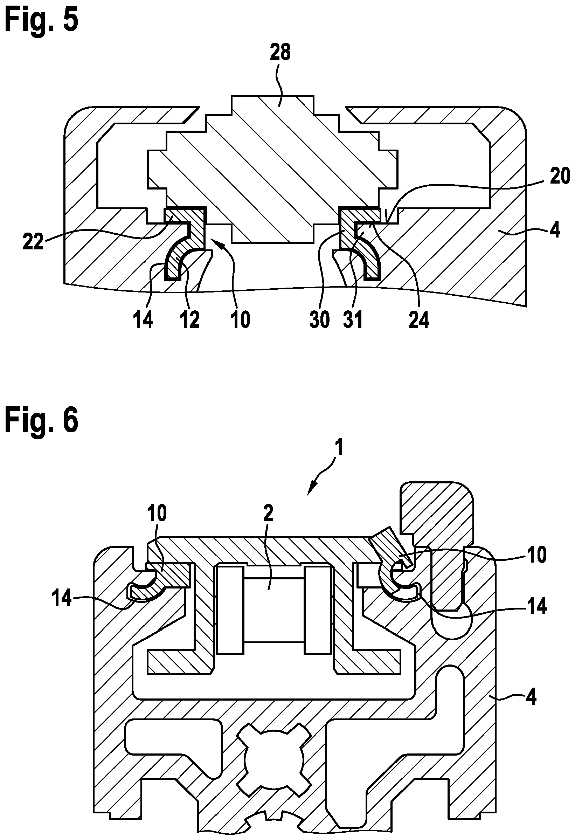

In Fig. 2 ist ein Ausschnitt einer Variante eines Fördersystems 1 mit dem Profilkörper 4 gezeigt. Das in Figur 2 dargestellte Fördersystem 1 ist zur Verwendung von Staurollenketten ausgelegt. Darüber hinaus sind die Gleitleisten 10 dargestellt, die in die Ausnehmungen 14 des Profilkörpers 4 ein-, bzw. angesetzt sind. Auf der in dieser Darstellung linken Seite des Profilkörpers 4 ist die Gleitleiste 10 an die Ausnehmung 14 angesetzt, sie befindet sich also in der Einbauposition. Ein danebenstehender Pfeil zeigt die Einbaurichtung 4 der Gleitleiste 10 in die Ausnehmung 14 an. Demnach wird die Gleitleiste 10 in einer bogenförmigen Bewegung in die Ausnehmung 14 eingeführt. Am Ende des Einbauprozesses befindet sich die Gleitleiste 10 in ihrer Endlage. Diese Endlage ist auf der hier rechts dargestellten Seite zu sehen. Auf dieser Seite ist neben der Gleitleiste 10 ein weiterer Pfeil dargestellt, der die Ausbaurichtung 8 der Gleitleiste 10 verdeutlichen soll. Demzufolge wird die Gleitleiste 10 in einer bogenförmigen Bewegung nach oben aus der Ausnehmung 14 herausgeführt ("herausgedreht") und kann anschließend nach oben entnommen werden. Weitere Ausführungsbeispiele mit Staurollenketten sind in den Figuren 4 und 5 gezeigt. Die Förderrichtung erstreckt sich senkrecht zur Ansichtsebene. Die Staurollenkette wird über die Gleitleisten 10, im eingebauten Zustand, auf dem Profilkörper 4 abgestützt. Des Weiteren sorgt auch bei diesem Ausführungsbeispiel das Gewicht der Kette dafür, dass die Gleitleisten 10 in ihrer in Figur 2 rechts dargestellten Endlage gehalten werden. Um die Gleitleisten 10 in dem Fördersystem 1 zu wechseln, ist es ausreichend, die Kette ein Stück von der Gleitleiste 10 abzuheben, um diese, wie vorbeschrieben, aus den Ausnehmungen 14 des Profilkörpers 4 in Ausbaurichtung 8 zu entnehmen. Der Einsatz einer neuen Gleitleiste 10 kann ebenso leicht in umgekehrter Reihenfolge erfolgen. Bei den aus dem Stand der Technik bekannten Lösungen wird die Kette 2, 28 aus dem Profilkörper gezogen, also nahezu vollständig entfernt, wobei eine Demontage des Antriebs, der Umlenkung und sonstiger Bauteile, erfolgen muss.

Figur 3 zeigt eine Detaildarstellung der Gleitleiste 10 gemäß Figur 1 oder 2, die in die Ausnehmung 14 des Profilkörpers 4 eingesetzt ist, in einer Schnittdarstellung. Ein rechteckförmiger Grundkörper 22 der Gleitleiste 10 liegt auf einer Abstützfläche 20 des Profilkörpers 4 auf. Die Abstützfläche 20 ist derart dimensioniert, dass sie die Last der hier nicht dargestellten Kette, die über die Gleitleiste 10 eingeleitet wird, aufnehmen kann. In der hier gewählten Darstellung ist ein Abstand zwischen der Gleitleiste 10 und der Abstützfläche 20 gezeigt, der ausschließlich zur besseren Unterscheidung der beiden Bauteile dient. Die Ausnehmung 14 hat an ihrer tiefsten Stelle, also an einem rückwärtigen Teil, die Anschlagfläche 18. Der vorzugsweise etwa rechteckförmige Grundkörper 22 bildet eine Überhöhung h gegenüber dem Profilkörper 4 aus, so dass die Kette ausschließlich auf der Gleitleiste 10 geführt wird und nicht in direkte Anlage mit dem Profilkörper 4 kommt. Aus dem Grundkörper 22 erstreckt sich der Gelenkschenkel 12.

Der Gelenkschenkel 12 ist in der Darstellung gemäß Figur 3 in die Ausnehmung 14 weitestgehend formschlüssig eingeschwenkt worden, so dass dieser mit einem Endabschnitt an der Anschlagfläche 18 anliegt. Auch hier ist der Abstand ausschließlich zur besseren Unterscheidung der Bauteile eingezeichnet. Erfindungsgemäß ist die Ausnehmung 14 entsprechend der Form des Gelenkschenkels 12 ausgebildet, so dass dieser passgenau in die bogenförmige Ausnehmung 14 eingeschwenkt werden kann. Mit einer an den Eckbereich 16 angrenzenden Unterseite 24 liegt die Gleitleiste 10 auf der Abstützfläche 20 des Profilkörpers 4. Eine Oberseite 26, die der Unterseite 24 des Grundkörpers 22 gegenüberliegt, dient zur Auflage der Kette.

Anhand der Figur 4 wird ein weiteres Ausführungsbeispiel des Fördersystems 1 gezeigt. Das Fördersystem 1 ist auch zur Verwendung von Staurollenketten 28 ausgelegt. Die Gelenkschenkel 12 der Gleitleiste 10 erstreckt sich bei diesem Ausführungsbeispiel nicht aus einem Eckbereich 16 der Gleitleiste 10 heraus. Vielmehr erstreckt sich von einer von der Staurollenkette 28 abgewandten Seite der Gleitleiste 10 in einem Eckbereich 16 eine zum Grundkörper 22 senkrechte Verlängerung 30, an der der bogenförmige Gelenkschenkel 12 angeordnet ist.

In Figur 5 ist ein vergrößerter Ausschnitt des oberen Abschnitts dieses Ausführungsbeispiels gezeigt. Der bogenförmige Gelenkschenkel 12 der Gleitleiste 10 ist wiederum derart ausgebildet, dass er in eine Ausnehmung 14 des Profilkörpers 4 eingesetzt wird. Im lasttragenden Bereich der Staurollenkette 28, der in der Detaildarstellung der Figur 5 gezeigt ist, sind die Gleitleisten 10 in einfacher Art und Weise, wie vorbeschrieben, also senkrecht zur Förderebene, austauschbar. Der Austausch erfolgt dabei auf vergleichbare Art und Weise wie bei den vorbeschriebenen Ausführungsbeispielen.

Figur 5 zeigt eine Detaildarstellung des oberen Bereichs des Führungsprofils gemäß Figur 4. Im eingesetzten Zustand der Gleitleiste 10, also in der Endlage, taucht der Gelenkschenkel 12 in die Ausnehmung 14 ein, die Verlängerung 30 liegt an einem Vorsprung 31 des Profilkörpers 4 an und ein lasttragender Gleitbereich der Gleitleiste 10, der zwischen dem Profilkörper 4 und der Staurollenkette 28 angeordnet ist, liegt in dieser Darstellung oben auf dem Profilkörper 4 auf, so dass die Unterseite 24 des Grundkörpers 22 mit der Abstützfläche 20 des Profilkörpers 4 in Anlage ist. Der Vorsprung 31 wird somit von der Gleitleiste 10 umgriffen.

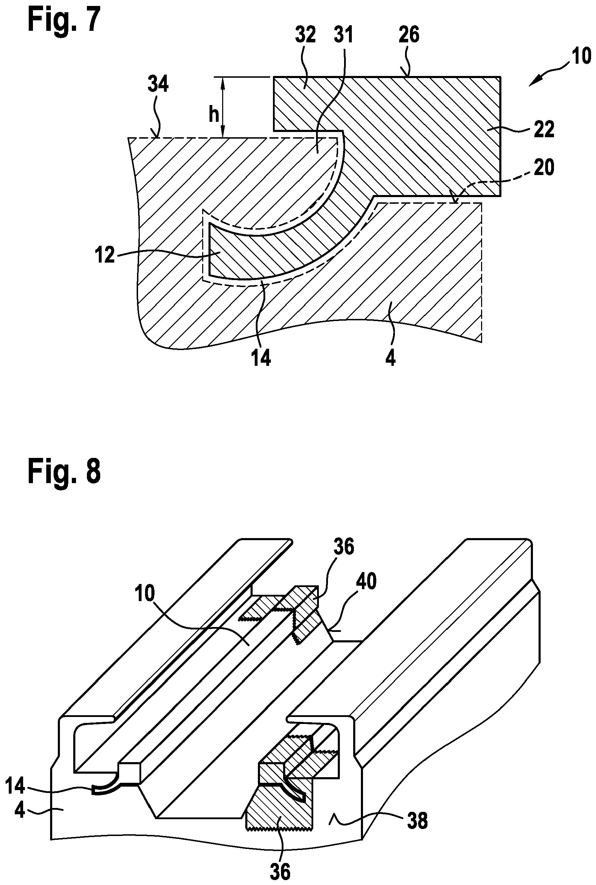

Figur 6 zeigt ein weiteres Ausführungsbeispiel eines Fördersystems 1, das zur Verwendung von Flachplattenketten 2 vorgesehen ist. Im Vergleich zu den Ausführungsbeispielen, die in den Figuren 1 bis 5 beschrieben wurden, weisen die Gleitleisten 10 einen zusätzlichen Abstützbereich 32 auf, der sich aus der Oberseite 26 der Gleitleiste 10 in Richtung der Außenseiten des Profilkörpers 4 erstreckt. Dieses Detail ist in Figur 7 gezeigt, die eine Detaildarstellung der Gleitleiste 10 gemäß Figur 6 darstellt. Der grundsätzliche Aufbau der Gleitleiste 10, sowie des Profilkörpers 4 und der Ausnehmung 14 entsprechen dem in Figur 3 gezeigten Ausführungsbeispiel. Der Abstützbereich 32 erstreckt sich in der Darstellung gemäß Figur 7 in Verlängerung des Grundkörpers 22 über die Ausnehmung 14 hinweg und ist auf einer weiteren Abstützfläche 34 abgestützt. Auch bei diesem Ausführungsbeispiel ist somit der Vorsprung 31 vom Grundkörper 22, dem Abstützbereich 32 und dem Gelenkschenkel 12 umgriffen.

Allen vorbeschriebenen Ausführungsbeispielen ist es gemein, dass diese am fertig montierten Fördersystem 1 gewechselt werden können. Auch ungewollt leicht verbogene Gleitleisten 10, oder durch den Herstellprozess in der Geradheit abweichende Gleitleisten 10, können durch den Hinterschnitt trotzdem in einem erfindungsgemäßen Fördersystem 1 verwendet werden. Es entsteht keine Störkontur zur Kette 2, 28. Dies ist besonders beim Einsatz von Flachplattenketten 2, die mit Kunststoff versehen sind, existentiell, da diese sonst umgehend beschädigt werden könnten. Eine weitere Gemeinsamkeit ist es, dass kein gesonderter Niederhalter notwendig ist, der die Gleitleisten 10 in der gewünschten Position hält. Dies geschieht allein durch das Gewicht der jeweils verwendeten Kette 2, 28.

Figur 8 zeigt eine vereinfachte dreidimensionale Ansicht eines oberen Abschnitts eines Ausführungsbeispiels eines erfindungsgemäßen Führungsprofils. Die Gleitleisten 10 sind in die Ausnehmungen 14 eingeschwenkt und befinden sich in ihrer Endlage. Um ein Verrutschen und/oder ein Verkippen der Gleitleisten 10 während des Transports zu verhindern, sind diese mit einer Transportsicherung versehen. Diese ist im vorliegenden Ausführungsbeispiel als Klebeband 36 ausgeführt und wird jeweils stirnseitig über den Profilkörper 4 und die Gleitleisten 10 geklebt/positioniert. In der Figur 8 sind exemplarisch die hintere linke Seite und die vordere rechte Seite jeweils mit einem Klebeband 36 versehen, dass sich von einer jeweiligen Stirnseite 38, 40 über den Profilkörper 4 und einen jeweiligen Endabschnitt der Gleitleisten 10 hin in einen Innenbereich des Profilkörpers 4 erstreckt und mit der klebstoffbehafteten Seite auf den vorgenannten Komponenten befestigt ist. Selbstverständlich sind auch andere Transportsicherungen denkbar. Transportdeckel, die stirnseitig auf den Profilkörper aufgesetzt werden sind ebenso denkbar, wie Klammersysteme, die die Gleitleiste 10 in ihrer Endlage halten.

### Bezugszeichenliste:

- 1: Fördersystem
- 2: Flachplattenkette
- 4: Profilkörper
- 6: Einbaurichtung
- 8: Ausbaurichtung
- 10: Gleitleiste
- 12: Gelenkschenkel
- 14: Ausnehmung
- 16: Eckbereich
- 18: Anschlagfläche
- 20: Abstützfläche
- 22: Grundkörper
- 24: Unterseite
- 26: Oberseite
- 28: Staurollenkette
- 30: Verlängerung
- 31: Vorsprung
- 32: Abstützbereich
- 34: Abstützfläche
- 36: Klebeband
- 38: Stirnfläche
- 40: Stirnfläche
- h: Überhöhung

## Patentansprüche

1. Führungsprofil für ein Fördersystem (1) mit einem Profilkörper (4), in den eine Gleitleiste (10) eingesetzt ist, die ausgelegt ist, das Gewicht einer Kette (2, 28) des Fördersystems (1) an dem Profilkörper (4) abzustützen, wobei die Gleitleiste (10) zumindest abschnittsweise in Anlage mit dem Profilkörper (4) ist, wobei die Gleitleiste (10) einen Gelenkschenkel (12) aufweist, der ausgelegt ist, durch Einschwenken oder Einwinkeln etwa senkrecht zur Förderrichtung in eine Ausnehmung (14) des Profilkörpers (4) eingesetzt zu werden, **dadurch gekennzeichnet, dass** der Gelenkschenkel (12) als bogenförmiger Schwenkschenkel ausgebildet ist und die Ausnehmung (14) entsprechend der Form des Gelenkschenkels (12) ausgebildet ist, so dass der Gelenkschenkel (12) formschlüssig und passgenau in die bogenförmige Ausnehmung (14) einschwenkbar ist.

2. Führungsprofil nach einem der vorhergehenden Ansprüche, **dadurch gekennzeichnet, dass** der Gelenkschenkel (12) in einem Eckbereich (16) der Gleitleiste (10) ausgebildet ist.

3. Führungsprofil nach einem der vorhergehenden Ansprüche, **dadurch gekennzeichnet, dass** die Gleitleiste (10) etwa senkrecht zu einer Förderrichtung in den Profilkörper (4) einsetzbar ist.

4. Führungsprofil nach einem der vorhergehenden Patentansprüche, **dadurch gekennzeichnet, dass** die Gleitleiste (10) durch einen Hinterschnitt an dem Gelenkschenkel (12) in Förderrichtung formschlüssig lagegesichert ist.

5. Führungsprofil nach einem der vorhergehenden Patentansprüche, **dadurch gekennzeichnet, dass** die Gleitleiste (10) ohne Verrastung in ihrer Endlage gehalten ist.

6. Führungsprofil nach einem der vorhergehenden Ansprüche, mit zumindest einer Transportsicherung, die an zwei gegenüberliegenden Stirnflächen (38, 40) des Profilkörpers (4) die Gleitleisten (10) in ihrer Endlage hält.

7. Führungsprofil nach einem der vorhergehenden Ansprüche, **dadurch gekennzeichnet, dass** der Gelenkschenkel (12) der Gleitleiste (10) an einer Verlängerung (30) ausgebildet ist.

8. Führungsprofil nach Anspruch 7, **dadurch gekennzeichnet, dass** die Verlängerung (30) an einem Vorsprung (31) des Profilkörpers (4) anliegt.

9. Fördersystem mit einem Führungsprofil nach einem der vorhergehenden Ansprüche, mit einer Kette (2, 28), die über die Gleitleiste (10) an dem Profilkörper (4) abgestützt ist, wobei das Eigengewicht der Kette (2, 28) die Gleitleiste (10) in einer Endlage hält.

10. Fördersystem nach Anspruch 9, **dadurch gekennzeichnet, dass** die Kette (2, 28) eine Staurollenkette (28) oder eine Flachplattenkette (2) ist.

## Claims

1. Guide profile for a conveyor system (1) with a profile body (4), into which a sliding rail (10) is inserted which is designed to support the weight of a chain (2, 28) of the conveyor system (1) on the profile body (4), at least sections of the sliding rail (10) being in contact with the profile body (4), the sliding rail (10) having an articulated limb (12) which is designed to be inserted into a recess (14) of the profile body (4) by way of pivoting in or angling in approximately perpendicularly with respect to the conveying direction, **characterized in that** the articulated limb (12) is configured as an arcuate pivoting limb, and the recess (14) is configured in accordance with the shape of the articulated limb (12), with the result that the articulated limb (12) can be pivoted in a positively locking manner and with an accurate fit into the arcuate recess (14).

2. Guide profile according to the preceding claim, **characterized in that** the articulated limb (12) is configured in a corner region (16) of the sliding rail (10) .

3. Guide profile according to either of the preceding claims, **characterized in that** the sliding rail (10) can be inserted into the profile body (4) approximately perpendicularly with respect to a conveying direction.

4. Guide profile according to one of the preceding claims, **characterized in that** the sliding rail (10) is secured positionally in a positively locking manner in the conveying direction by way of an undercut on the articulated limb (12).

5. Guide profile according to one of the preceding claims, **characterized in that** the sliding rail (10) is held in its end position without latching.

6. Guide profile according to one of the preceding claims, with at least one transport securing means which holds the sliding rails (10) in the end position onto the end faces (38, 40) of the profile body (4) which lie opposite one another.

7. Guide rail according to one of the preceding claims, **characterized in that** the articulated limb (12) of the sliding rail (10) is configured on an extension (30).

8. Guide profile according to Claim 7, **characterized in that** the extension (30) bears against a projection (31) of the profile body (4).

9. Conveyor system with a guide profile according to one of the preceding claims, with a chain (2, 28) which is supported via the sliding rail (10) on the profile body (4), the weight of the chain (2, 28) holding the sliding rail (10) in an end position.

10. Conveyor system according to Claim 9, **characterized in that** the chain (2, 28) is an accumulating roller chain (28) or a flat top chain (2).

## Revendications

1. Profilé de guidage pour un système de transport (1) avec un corps profilé (4) dans lequel est insérée une baguette de glissement (10) qui est conçue pour soutenir le poids d'une chaîne (2, 28) du système de transport (1) sur le corps profilé (4), la baguette de glissement (10) étant au moins par sections en appui sur le corps profilé (4), la baguette de glissement (10) présentant une branche d'articulation (12) qui est conçue pour être insérée dans un évidement (14) du corps profilé (4) par pivotement ou coudage approximativement perpendiculairement à la direction de transport, **caractérisé en ce que** la branche d'articulation (12) est réalisée sous forme de branche pivotante en forme d'arc et l'évidement (14) est réalisé en fonction de la forme de la branche d'articulation (12), de telle sorte que la branche d'articulation (12) peut être pivotée par complémentarité de forme et avec un ajustement précis dans l'évidement en forme d'arc (14).

2. Profilé de guidage selon l'une quelconque des revendications précédentes, **caractérisé en ce que** la branche d'articulation (12) est réalisée dans une zone d'angle (16) de la baguette de glissement (10).

3. Profilé de guidage selon l'une quelconque des revendications précédentes, **caractérisé en ce que** la baguette de glissement (10) peut être insérée dans le corps profilé (4) approximativement perpendiculairement à une direction de transport.

4. Profilé de guidage selon l'une quelconque des revendications précédentes, **caractérisé en ce que** la baguette de glissement (10) est bloquée en position par complémentarité de forme dans la direction de transport par une contre-dépouille sur la branche d'articulation (12) .

5. Profilé de guidage selon l'une quelconque des revendications précédentes, **caractérisé en ce que** la baguette de glissement (10) est maintenue dans sa position finale sans encliquetage.

6. Profilé de guidage selon l'une quelconque des revendications précédentes, avec au moins une sécurité de transport qui maintient les baguettes de glissement (10) dans leur position finale sur deux surfaces frontales (38, 40) opposées du corps profilé (4).

7. Profilé de guidage selon l'une quelconque des revendications précédentes, **caractérisé en ce que** la branche d'articulation (12) de la baguette de glissement (10) est réalisée sur un prolongement (30).

8. Profilé de guidage selon la revendication 7, **caractérisé en ce que** le prolongement (30) s'appuie sur une saillie (31) du corps profilé (4).

9. Système de transport avec un profilé de guidage selon l'une quelconque des revendications précédentes, avec une chaîne (2, 28) qui est soutenue sur le corps profilé (4) par l'intermédiaire de la baguette de glissement (10), le poids propre de la chaîne (2, 28) maintenant la baguette de glissement (10) dans une position finale.

10. Système de transport selon la revendication 9, **caractérisé en ce que** la chaîne (2, 28) est une chaîne à rouleaux d'accumulation (28) ou une chaîne à plaques plates (2).
